# EUROPEAN PATENT APPLICATION

(11) **EP 1 253 796 A2**
(43) Date of publication of application: **30.10.2002**
(21) Application number: 02006599.1
(22) Date of filing: 22.03.2002
(51) Int. Cl.: H04Q 7/38

(54) **Method of selecting a network access measure from multiple access measures**

(30) Priority: 27.04.2001 US 844997
(71) Applicant: DoCoMo Communications Laboratories USA, Inc., San Jose, CA 95110 (US)
(72) Inventor: Kurakake, Shoji, San Jose, CA 95110 (US); Hagan, William Alexander, San Jose, CA 95110 (US)
(74) Representative: HOFFMANN - EITLE

(57) **Abstract**

A communication system includes a communication device and a communication server. A network of the communication system may include multiple access measures. The communication device is capable of connecting the network using multiple access measures and a server connects to the network. A set network-access measure is used to communicate with the server and the server provides information to the communication device such as the availability of various network-access measures, authentication-key information and communication software for the communication device to use.

## Description

### BACKGROUND

Communication systems that support services like the i-mode service are generally application-specific systems. In such systems, a service provider provides an i-mode service user a mobile terminal, a mobile access network, a core network and a Gateway to the Internet. Typically, necessary equipment and facilities are pre-defined and owned by the service provider. The equipment and facilities that provide a service are commonly called resources.

In the future, however, the service provider may want to provide a variety of services in more flexible way. Services may not be provided by predefined resources, but by any available resources. Examples of such resources are network access resources such as a high data rate mobile wireless network such as the 3G mobile wireless network, 4G mobile wireless network, wireless LAN and Wireless Local Loop, a video/audio codec, a computing server, a proxy server and a disk server. Those resources are not necessarily owned by the service provider but are available for users. For example, when a user wants to begin a videoconference, if a high data rate wireless access and high quality audio/video codec are available, the user can enjoy a high quality videoconference. If only a low bit rate access network is available, the user conducts a low quality videoconference.

There is a need for a system that determines available resources and can utilize those resources to enable flexible service. Preferably, determining and utilizing resources are conducted on a per demand basis. Previous solutions such as resource discovery technology typically only address network devices that are continuously connected to a network, such as a network printer. Known resources, however, can include a right to use movie contents, an office space that hosts disk servers and home devices that do not continuously connect to a network but can be connected temporally, for example, using a local wireless connection with protocols such as BLUETOOTH or a long range wireless connection such as a cell phone.

### BRIEF SUMMARY

According to an embodiment, at least one server provides network resource information to a user's device. A network access measure is an example of network resources. For example, if a mobile terminal is capable of using access measures such as a 2G mobile wireless network, 3G mobile wireless network, wireless LAN, BLUETOOTH or wired connection, a user may want to use the most cost efficient access measure available. On the other hand, the user may want to use the most reliable access measure available, depending on the task the user wants to conduct.

Accordingly, the user's device connects to the server to determine available access measures at the user's location and at the time the user wants to conduct tasks. Tasks can include, for example, web browsing, video conferencing and database accessing. Different tasks may require different network quality, for example, bandwidth and latency. The server can contain access measure information. A default access measure can be used to connect the user's device to the server so that the server can be queried to send the information to the user's device. Other information can also be stored at the server such as information pertaining to the use of other access measures including availability, technical specifications and software needed to communicate using a specified access measure.

### BRIEF DESCRIPTION OF THE DRAWINGS

Fig. 1 is a block diagram illustrating of an exemplary communication system.
Fig. 2 is a block diagram illustrating features of the server according to a preferred embodiment.
Fig. 3 is a block diagram of the communication device according to a preferred embodiment.
Fig. 4 is a block diagram of the server according to a preferred embodiment.
Fig. 5 is a block diagram of another embodiment of the communication device.

### DETAILED DESCRIPTION

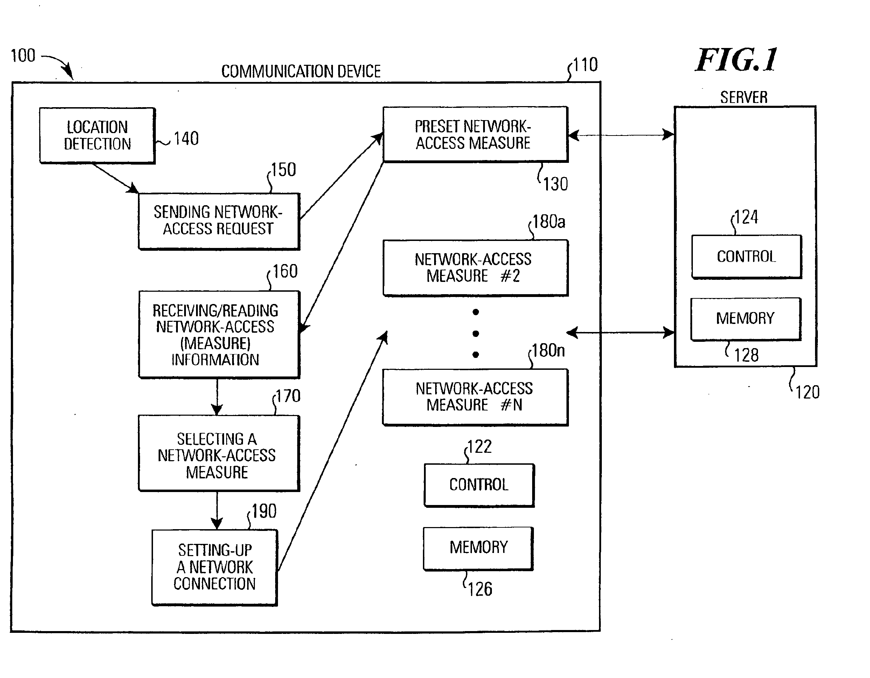

Fig. 1 is a block diagram illustrating of a communication system 100 including a communication device 110 and a server 120. For purposes of describing the invention, the communication device 110 includes, for example, a device for a wireless system, such as a cellular system, a personal communications services (PCS) system and a software defined radio system, typically used by a user. The communication device 110 could also be used with other systems, such as wireline systems. The server 120 can include one or multiple servers located at one or more locations. The communication device 110 can access the server 120, for example, using wireless, wireline or cellular communications. The communication device 110 could also access the server 120 in other ways, for example, using satellite communications.

The communication device 110 and the server 120 include a control device 122, 124 and a memory device 126, 128. The control device 122, 124 in one embodiment includes digital logic for implementing control functions of the communication device 110 and the server 120. The control device 122, 124 may include a microprocessor, microcontroller or digital signal processor. Such a processor operates in conjunction with data and instructions stored in the memory device 126, 128 to control components of the communication device 110 and the server 120. In other embodiments, the control device 122, 124 may include a user interface. Typical user interface elements include a display and keyboard or keypad as well as a microphone and speaker for audio processing (not shown).

Utilizing the memory device 128 for example, or another device, the server 120 can store information regarding an access measure available to the communication device 110. The type of access measure available to the communication device 110 typically depends on the location and the capability of the communication device 110. By storing access measure information at the server 120, the communication device 110 can obtain access measure information from the server 120 that may otherwise be difficult to obtain. For example, it is often difficult for a communication device 110 to detect a wireless signal when the communication device 110 cannot determine the characteristics of the wireless signal.

To accommodate connection of the communication device 110 to the server 120, the communication device 110 can include a determined network-access measure module 130 that can be set to access the server 120. The communication device 110 also includes a location detection module 140 for detecting the location of the communication device 110. The location detection module 140 provides location information to an information module 150. The information module 150 connects with the network-access measure module 130 to inform the server 120 of the communication device's location. The information module 150 can also inform the server of network access measures usable by the communication device 110 and can provide a request for network access.

Thus, for example, when the user wants to place a call via the communication device 110, the communication device uses the network-access measure 130 to access the server 120. Thereafter, the communication device sends location information to the server 120. Those skilled in the art will appreciate that the communication device 110 can also continuously connect with the server and continuously, or periodically, provide the server 120 with information, such as location information and usable network-access measure information. The server 120 uses the location information to determine what access measures are available to the communication device 110 for the communication device's location. For example, at different locations a different combination is available of the access measure such as high data rate mobile wireless network like the 3G mobile wireless network, 4G mobile wireless network, wireless LAN and Wireless Local Loop, satellite and radio. The server 120 then sends the access measure information to the communication device 110. In a preferred embodiment, only information regarding access measures that can be used by the communication device 110 is sent to the communication device 110.

At the communication device 110, a receiving module 160 connects with the network-access measure module 130 to receive and read the information of available network-access measures provided by the server 120. The communication device 110 also includes a selection module 170 connected with the receiving module 160. The selection module 170 selects a network-access measure from network-access measure 130 and 180a-n. The selected network-access measure is a measure that is available at the location of the communication device 110. Availability of network-access measures is determined by the information received from the server 120.

To establish a network connection using the selected network-accessing measure, a set-up module 190 provides a connection to the network-access measure module 130, 180a-n in accordance with information received from the selection module 170. The set-up module 190 performs various set-up procedures that may be required in establishing a network connection, such as the setting up of authentication key information, a preferred coding method and communication protocols, described in more detail below.

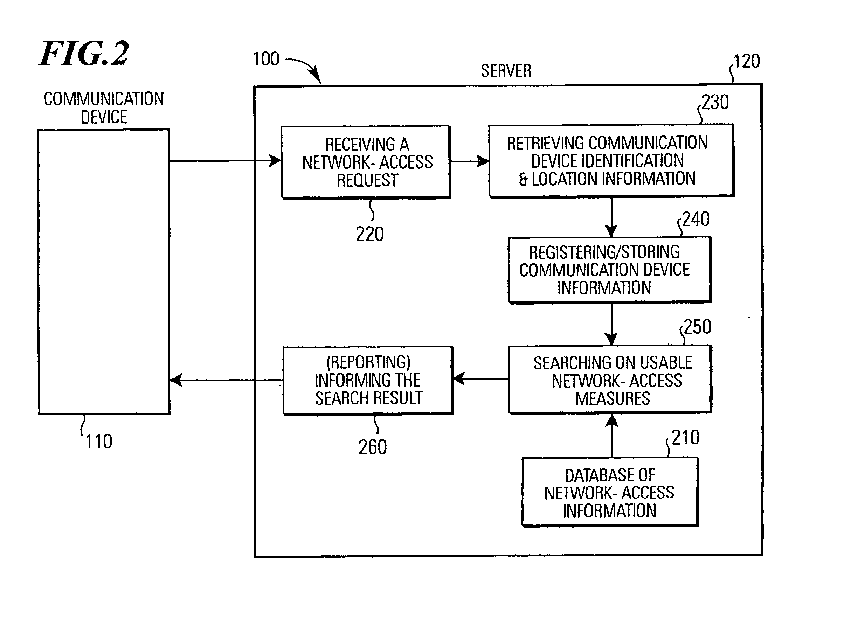

Fig. 2 is a block diagram illustrating an exemplary server 120. The server 120 includes a database 210 to collect and/or store information regarding network-access measures available at different locations in the communication system 100. The server 120 also includes a network-access request module 220 to receive a network-access request from the communication device 110 and an information-retrieving device 230 connected with the network-access request module 220 that retrieves information from the network-access request. The information to be retrieved from the access request includes identification and location information of the communication device, and network-access measures usable by the communication device.

Connected with the information-retrieving device 230, the server 120 also includes a storage device 240 that can register and store the information of identification and location of the communication device 110. The storage device 240 also stores information regarding usable network-access measures 130 and 180a-n. A search device 250 connects with the storage device 240 to determine which network-access measures are available to the communication device 110 at the location of the communication device 110. An informing device 260 connects the search device 250 to the communication device 110 to inform the communication device 110 of the determined network-access measure information.

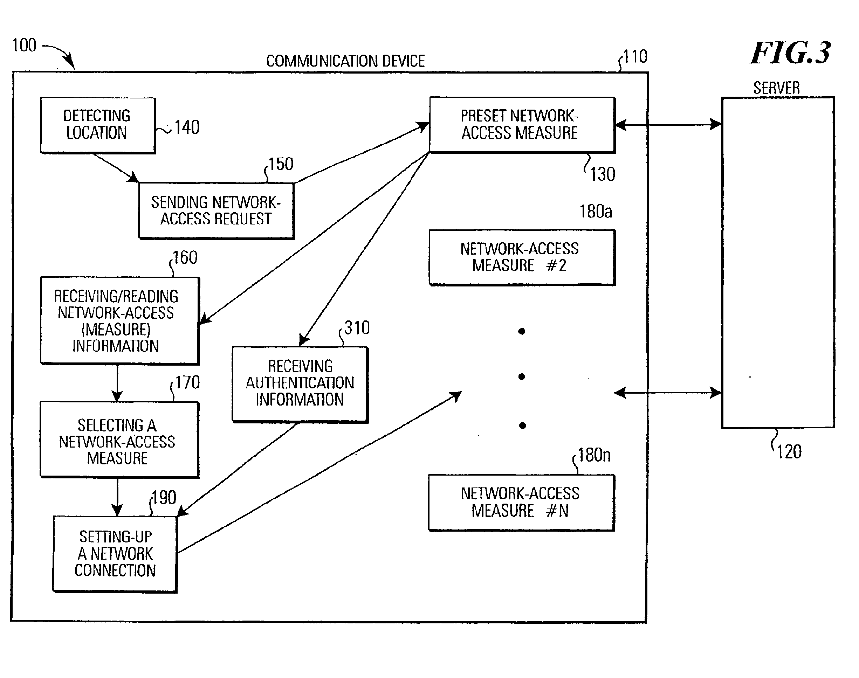

Fig. 3 is a block diagram of the communication device 110 of the communication system 100 further including an authentication information-retrieving device 310 to retrieve authentication key information required by some service providers for using the network-access measures 130, 180a-n. The authentication information-retrieving device 310 connects with the server 120 via the network-access measure 130 to receive authentication-key information. As described above, the receiving module 160 connects with the network-access measure 130 to receive the available network-access measure information provided by the server 120. Thereafter, the network-access measures 130, 180a-n access an available network using authentication key information. The communication device 110 may include, or the server 120 may provide, a way to run a communication software program matching the selected network-access measure, as described in more detail below.

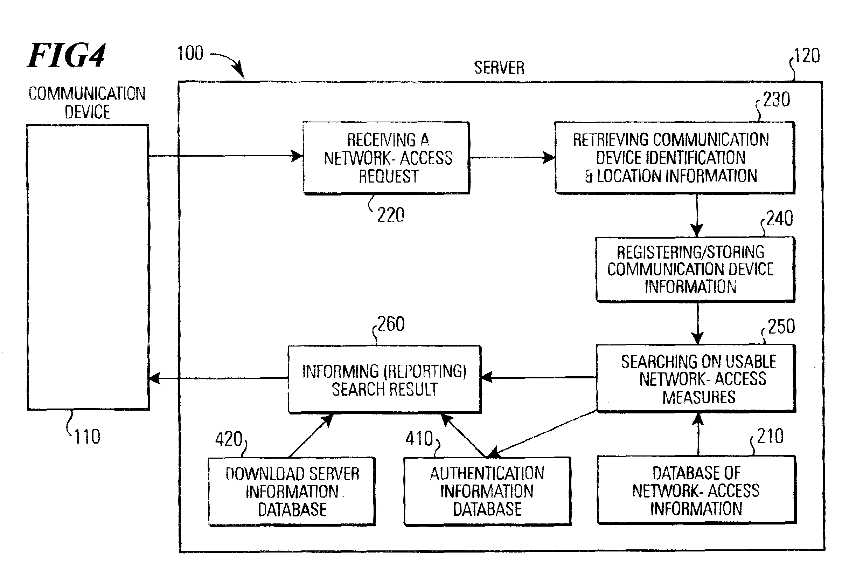

Fig. 4 is a block diagram of the server 120 further including an authentication information database 410 and a download server information database 420. The search device 250 can be used to search for authentication-key information provided by the authentication information database 410. To provide the authentication-key information to the communication device 110 when the information is determined, the authentication information database 410 connects with the informing device 260.

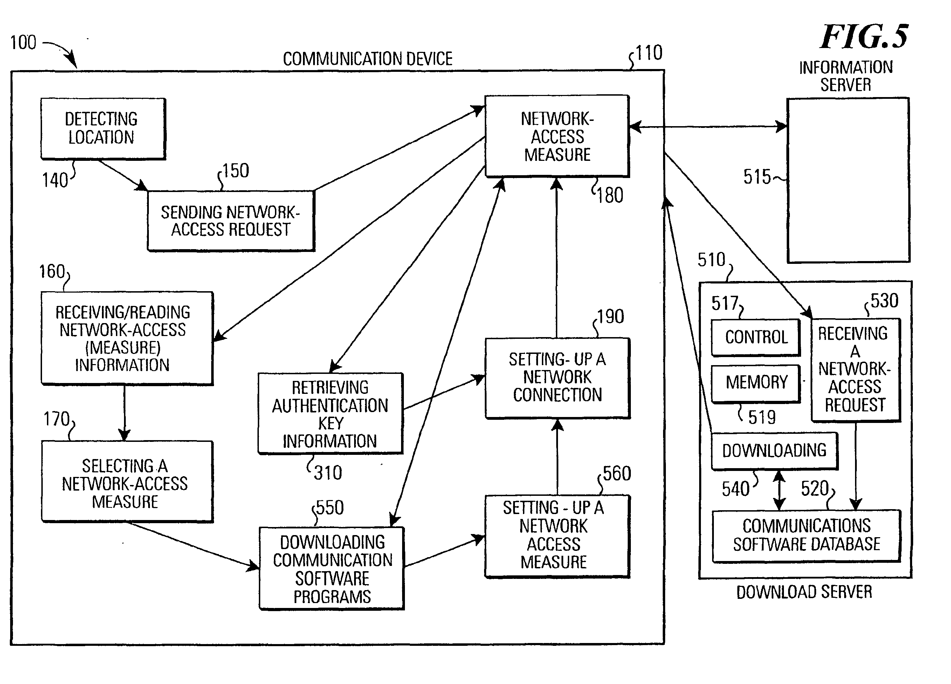

Referring also to Fig. 5, the download server database 420 connects to the informing device 260 to provide server database information to the communication device 110. Server database information includes, for example, a URL and/or Internet Protocol (IP) address that can connect the communication device 110 to a third party download server 510.

Fig. 5 is a block diagram of an embodiment of a communication system 100 that includes a separate information server 515 and the download server 510. However, the download server could also be part of the information server 515, such as server 120. The download server 510 can include a control device 517 and a memory device 519, to run and store instructions and data, respectively. The download server 510 could also include a communication software database 520 to store and search for communication software programs. The communication software implements operations including a specific communication method to be used for the network-access measure, parameters for communications, such as a frequency and chip rate, or programs for establishing communications, such as a protocol stack.

When the download server 510 receives a network-access request at block 530 the download server 510 downloads at block 540 a communication software program and other information to at least one network access measure 180. The function of the network access measure 180 can be changed depending on the communication software downloaded from a download server510. For example, when communication software for a 4G mobile wireless network is downloaded and operated, the network access measure 180 acts as a network access measure for 4G mobile wireless network. When communication software for Wireless LAN is downloaded and operated, the network access measure 180 acts as a network access measure for Wireless LAN. The network access measure 180 acts as a programmable circuit with wireless antenna and connector to wireline network.

At block 550 the network-access measure 180 downloads the communication software program to the communication device 110. The communication device 110 may include an access measure setup device 560 to set up the network-access measure 180 by operating the communication software programs. The access measure setup device 560 connects with the setup module 190 that connects with the network-access measure 180. The access measure setup device 560 sets up a network connection via network-access measure 180.

It can be appreciated that the above-described system can operate when a communication base station hands off a call to another communication base station including the same or different network-access measures. During a communication, as the communication device changes locations, the communication device preferably receives new available network-access measure information from an update mechanism of the server 120, 515. Thereafter, the communication device 110 can switch to a new network-access measure selected from the available network-access measures presented by the server 120, 515, while preferably maintaining the communication.

While the invention has been described above by reference to various embodiments, it will be understood that many changes and modifications can be made without departing from the scope of the invention. It is therefore intended that the foregoing detailed description be understood as an illustration of the presently preferred embodiments of the invention, and not as a definition of the invention. It is only the following claims, including all equivalents, which are intended to define the scope of this invention.

## Claims

1. A communication system that utilizes a plurality of network-access measures comprising:
a communication device operable to connect the network using at least one of the multiple network-access measures;
a server operable to connect to the communication device to provide the communication device with an available network-access measure for a location of the communication device.

2. The communication system of claim 1 wherein the server comprises:
a database to store the network-access measures; and
an informing device to inform the communication device of a search result of available network-access measures.

3. The communication system according to claim 2 wherein the database further stores authentication-key information.

4. The communication system according to claim 3 wherein the server collects authentication key information from a service provider.

5. The communication system according to claim 3 wherein the informing device informs the communication device of the authentication-key information.

6. The communication system of claim 2 wherein the server further comprises:
an update mechanism to update information regarding available network-access measures when the communication device changes its location; and
an informing device for informing the communication device of the updated available network-access measure information.

7. The communication system of claim 1 wherein the server comprises:
an update mechanism to update information regarding available network-access measures when the communication device changes its location; and
an informing device for informing the communication device of the updated available network-access measure information.

8. The communication system of claim 1 wherein the communication device is operable to obtain communication software programs.

9. The communication system of claim 8 wherein the server provides the communication software to the communication device.

10. A communication system comprising:
a network including a plurality of access measures;
a communication device operable to connect the network using the multiple network-access measures by obtaining communication software programs; and
a server connected to the network to provide the communication software to the communication device.

11. The communication system of claim 10 wherein the server comprises:
an update mechanism to update information regarding available network-access measures when the communication device changes its location; and
an informing device for informing the communication device of the updated available network-access measure information.

12. The communication system according to claim 10 wherein the server further provides authentication-key information to the communication device.

13. The communication system according to claim 12 wherein the server collects authentication key information from a service provider.

14. A communication system that utilizes a plurality of network-access measure, the communication system comprising:
a communication device operable to use at least one of the plurality of network-access measures;
an information server operable to connect to the communication device to provide information about available network-access measures; and
a download server operable to connect to the communication device.

15. The communication system of claim 14 wherein the information server provides information to the communication device concerning information of the download server for downloading at least one software programs from the download server.

16. The communication system of claim 14 wherein the download server provides communication software programs to the communication device.

17. The communication system of claim 15 wherein the information server further comprises:
an update mechanism to update information regarding available network-access measures when the communication device changes its location; and
an informing device for informing the communication device of the updated available network-access measure information.

18. The communication system of claim 14 wherein the information server comprises:
an update mechanism to update information regarding available network-access measures when the communication device changes its location; and
an informing device for informing the communication device of the updated available network-access measure information.

19. The communication system according to claim 14 wherein the information server further provides authentication-key information to the communication device.

20. The communication system according to claim 19 wherein the information server collects authentication key information from a service provider.
